Europäisches Patentamt

European Patent Office

Office européen des brevets

(11) Publication number: **0 214 820 B1**

# EUROPEAN PATENT SPECIFICATION

(45) Date of publication of patent specification: **04.12.91**   (51) Int. Cl.⁵: **G11B 23/04**

(21) Application number: **86306696.5**

(22) Date of filing: **29.08.86**

(54) **Magnetic tape cartridges.**

(30) Priority: **30.08.85 JP 189887/85**
              **30.08.85 JP 131692/85 U**

(43) Date of publication of application:
    **18.03.87 Bulletin 87/12**

(45) Publication of the grant of the patent:
    **04.12.91 Bulletin 91/49**

(84) Designated Contracting States:
    **DE FR GB**

(56) References cited:
    **EP-A- 0 195 571**
    **US-A- 3 624 310**
    **US-A- 4 445 155**

(73) Proprietor: **SONY CORPORATION**
    **7-35 Kitashinagawa 6-Chome Shinagawa-ku**
    **Tokyo 141(JP)**

(72) Inventor: **Ohta, Toshiro c/o Patent Division**
    **Sony Corporation 6-7-35 Kitashinagawa**
    **Shinagawa-ku Tokyo 141(JP)**

(74) Representative: **Thomas, Christopher Hugo et al**
    **D Young & Co 10 Staple Inn**
    **London WC1V 7RD(GB)**

## Description

This invention relates to magnetic tape cartridges.

As is known, magnetic tape has a relatively large data storage capacity. Magnetic tape is especially useful as a storage medium when fast access is not required, such as when used for backup storage. Because of the relatively slow access to the desired data, magnetic tape is less popular than disc-type storage media, such a floppy discs, for use as backup storage. Therefore, recent computers generally employ disc-based data storage systems as built-in or external units.

Various floppy discs and disc-drives designed for use with associated discs have been developed. For example, United States patent specification US-A-4 445 155, disclose a typical construction of a microfloppy disc, that is a 3.5-inch (about 89 mm) floppy disc and a disc-drive therefor. The micro-floppy disc is in the form of a floppy disc cassette or cartridge generally comprising a flexible magnetic disc and a cassette or cartridge casing. The flexible disc includes a centre core disc designed to be chucked on a turntable of the disc-drive. The disc-drive drives the centre core disc and the flexible disc.

Floppy discs are useful for fast access but have limited data storage capacity. Archival or backup storage of data stored on a hard disc generally takes twenty to eighty floppy discs due to their larger capacity. This involves substantial expense for the user. On the other hand, magnetic tape can easily accommodate all of the data stored on a hard disc. However, a special tape recording and/or reproducing apparatus has previously been necessary for copying data from the hard disc onto the magnetic tape storage medium. This is an additional expense for the user.

So as to allow the user to utilize magnetic tape for inexpensive backup storage of data on hard discs or floppy discs, it would be beneficial to provide a magnetic tape cartridge compatible with floppy disc-drives so that it may be driven by the same drive unit as floppy discs.

US patent specification US-A-3 624 310 discloses an adapter for enabling the playing of tape cartridges or tape cassettes on a gramophone record player and which is driven by the turntable of the record player and fits over the spindle thereof so that power for driving the tape capstan is obtained from rotation of the turntable.

European patent specification EP-A2-0 195 571 (Article 54(3) EPC) disclose a tape cartridge intended to utilize the read/write heads in a disc drive to read or write data from or on a tape in the cartridge. The cartridge has a section of a size and shape to be inserted in the disc drive and be driven thereby.

According to the present invention there is provided a magnetic tape cartridge comprising:

means for defining a tape run path for passing magnetic tape across a disc-drive head of a disc-drive for transferring data between said magnetic tape and said disc-drive head;

first and second reels provided at respective ends of said tape run path and having wound thereround said magnetic tape for feeding said magnetic tape from one of said reels to the other; and

means for selectively driving one of said first and second reels for winding said magnetic tape thereon from the other reel, said driving means including a first toothed gear provided for rotation with said first reel, a second toothed gear provided for rotation with said second reel and a third toothed gear connectable to a drive mechanism of said disc-drive to be driven by a driving force of said drive mechanism and arranged selectively to co-operate with one of said first and second toothed gears depending upon the driving direction of said drive mechanism.

A preferred embodiment of the magnetic tape cartridge according to the present invention comprises a cartridge casing defining a thin space, a pair of tape reels onto which a magnetic tape is wound and means for defining a path for the magnetic tape along which a portion of the tape is exposed at a location at which data can be transferred between the tape and the disc-drive head. The tape reels are associable with a drive mechanism for selectively driving one of the tape reels for driving the tape between the tape and the disc-drive head. The tape reels are associable with a drive mechanism for selectively driving one of the tape reels for driving the tape between the tape reels. The drive mechanism includes a centre core driven by means of a turntable. The drive mechanism further includes a power train including tape reel drive gears designed to drive associated tape reels and an input gear drivingly connectable to the centre core so as to be driven by the turntable. The input gear is associable with means for selectively meshing the input gear to one of the tape reel drive gears depending upon the direction of the rotation of the centre core.

Preferably the magnetic tape cartridge further comprises means for transmitting a driving force from the drive mechanism of the disc-drive to the third toothed gear. The driving force transmitting means include a rotary disc member rotatable with a turntable of the drive mechanism about a common rotational axis thereof, the third toothed gear being rotatable about an axis substantially parallel to the common axis of the rotary disc member and the turntable.

In a preferred embodiment the magnetic tape cartridge further comprises means for converting a rotational force of the third toothed gear to a force for shifting the third toothed gear between the first and second toothed gears.

The tape reel driving means includes means for converting rotation of the third toothed gear carrier assembly about its rotational axis into a rotation of a co-operating one of the first and second toothed gears about an axis extending substantially perpendicularly to the rotational axis of a third toothed gear, which first and second toothed gears are rotatable about common axes to the corresponding first and second tape reels. The third toothed gear is rotatably mounted on a pivotal base pivotable about a pivot axis, the third toothed gear co-operating with means for restricting rotation of the third toothed gear and converting the driving force of the drive mechanism into a force for causing pivotal movement of the pivotal base carrying the third toothed gear. The restricting means is responsive to a resistance to pivotal movement of the pivotal base carrying the third gear created by engagement of the third toothed gear with one of the first and second toothed gears and includes a clutch mechanism for releasing the third toothed gear from the restriction to allow the third toothed gear to rotate and thereby drive one of the first and second toothed gears with which the third toothed gear is engageable.

In a preferred embodiment, the rotational force converting means comprises a pinion gear releasably coupled with the third toothed gear and engageable with a rack plate extending along the radius of shifting of the third toothed gear, the pinion gear being maintained in a coupled condition with the third toothed gear carrier assembly while shifting of the third toothed gear is occurring and being released from the third toothed gear when the third toothed gear engages with one of the first and second toothed gears at the end of shifting thereof. Alternatively, the rotation converting means comprises the first and second toothed gears comprising bevel gears and intermediate gears having plane gear sections engageable with the third toothed gear to be continuously engaging with the first and second toothed gears for transmitting a driving force input through the third toothed gear carrier assembly to the first and second toothed gears. In a further alternative, the rotation converting means comprises a bevel gear section formed in the third toothed gear and bevel gears forming the first and second toothed gears.

The third toothed gear of the power train is preferably mounted on a pivotal base shiftable between the first and second positions. The third toothed gear is associable with means for restricting rotation of the third toothed gear carrier assembly in order to convert the rotational driving force of the disc-drive into a force causing pivotal movement of the third toothed gear between the first and second positions.

The tape run path defining means may comprise means for aligning the cartridge with the disc-drive when the cartridge is loaded into the disc-drive, and means for guiding the magnetic tape within the cartridge such that, when the cartridge is aligned with the disc-drive, the magnetic tape is registered with a location at which data can be transferred between the magnetic tape and the disc-drive head.

Preferably, in the first section of the cartridge, the guide means comprises a plurality of twist tape guides, the magnetic tape wrapping around each of the twist tape guides by substantially 180 degrees to change the direction of feed of the magnetic tape and to rotate a normal to the plane of the magnetic tape by substantially 180 degrees so that the magnetic tape feeds through the first section within a disc-like region, whereby the first section can have a disc-like shape suitable for insertion into a disc-drive. The storage means comprises a first tape reel and a second tape reel between which the tape is wound, the first and second tape reels are rotatable about a rotational axis extending laterally and horizontally with respect to the plane of the cartridge. The tape feeding means may comprise a drive motor incorporated in the disc-drive and a power train for transmitting a driving force of the drive motor to the third toothed gear, the power train including a clutch for releasably engaging the third toothed gear with the third toothed gear shifting means.

Alternatively, the driving force transmitting means may include a rotary disc member rotatable with a turntable of the drive mechanism about a common rotational axis thereof, the third toothed gear being rotatable about an axis substantially parallel to the common axis of the rotary disc member and the turntable.

The third toothed gear shifting means may comprise means for converting a rotational force of the third toothed gear transmitted through the rotary disc member to a force for shifting the third toothed gear between the first and second toothed gears.

Preferably, the first and second toothed gears are engaged with the first and second tape reels for rotation therewith about the laterally and horizontally extending rotational axis, and the tape feeding means includes means for converting the rotation of the third toothed gear about a vertically extending rotational axis into a rotation of one of the first and second toothed gears about the laterally and horizontally extending axis. The third toothed gear may be rotatably mounted on a pivotal base pivotable about its pivot axis, the third toothed gear co-operating with means for restricting rotation of the third toothed gear, thereby to convert the driving force of the drive mechanism into a force for causing pivotal movement of the pivotal base of the third toothed gear. The restricting means is responsive to a resistance to pivotal movement of the pivotal base carrying the third toothed gear created by engagement of the third toothed gear with one of the first and second toothed gears and includes a clutch mechanism for releasing the third toothed gear from the restriction to allow the third toothed gear to rotate for driving one of first and second toothed gears with which the third toothed gear is engageable.

In an alternative embodiment, the rotational force converting means comprises a pinion gear releasably coupled to the third toothed gear and engageable with a rack plate extending along the radius of shifting of the third toothed gear, the pinion gear being maintained in a coupled condition with the third toothed gear carrier assembly while shifting of the third toothed gear is occurring and being released from the third toothed gear when the third toothed gear engages with one of the first and second toothed gears at the end of shifting thereof.

In a further alternative embodiment, the rotation converting means comprises the first and second toothed gears comprising bevel gears and intermediate gears having a plane gear sections engageable with the third toothed gear to be driven by the latter, and bevel gear sections continuously engaged with the first and second toothed gears for transmitting the driving force input through the third toothed gear carrier assembly to the first and second toothed gears.

The rotation converting means may comprise a bevel gear section formed on the third toothed gear and bevel gears forming the first and second toothed gears.

The invention will now be described by way of example with reference to the accompanying drawings, throughout which like parts are referred to by like references, and in which:

Figure 1 is a perspective view of an embodiment of magnetic tape cartridge according to the present invention;

Figure 2 is a perspective view of the embodiment, but viewed from below;

Figure 3 is a plan view of the embodiment in which a portion of an upper half of the cartridge is removed to show a tape drive mechanism;

Figure 4 is a longitudinal section of the embodiment taken along line IV - IV of Figure 3 showing a tape mechansim;

Figure 5 is a cross-section taken along the line V - V of Figure 3;

Figure 6 is a partial plan view of the magnetic tape cartridge having a second type of drive mechanism;

Figure 7 is a section taken along line VII - VII of Figure 6;

Figure 8 is a partial plan view of the magnetic tape cartridge having a third type of tape drive mechanism; and

Figure 9 is a section taken along line IX - IX of Figure 8.

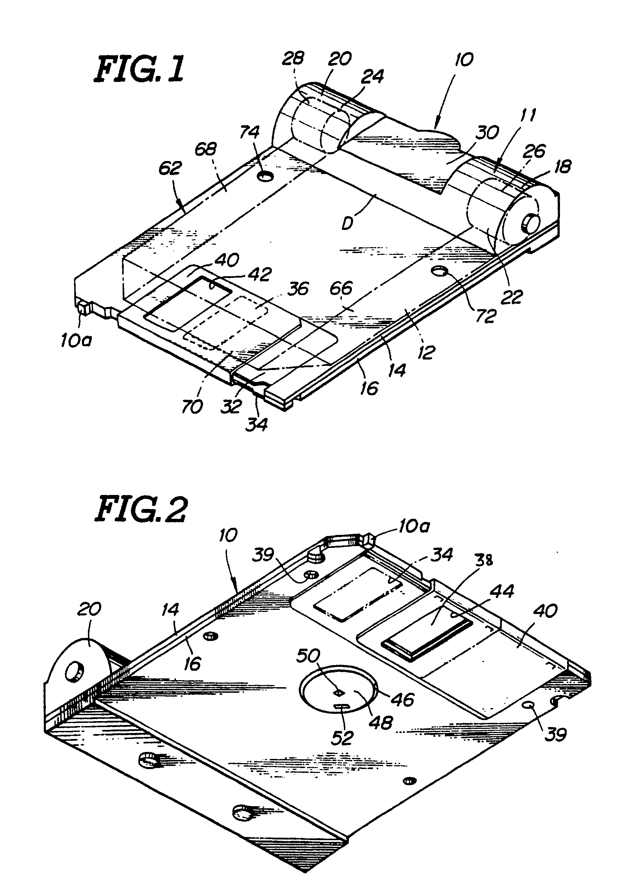

Figures 1 to 3 show a preferred embodiment of a magnetic tape cartridge 10 which is compatible with a disc-drive for floppy discs of corresponding size, such as 3.5-inch (about 89 mm) microfloppy discs of the type disclosed in United States patent specification US-A-4 445 155.

Hereinafter where the expression "gear" is used, this means "toothed gear".

Whilst the following discussion of the preferred embodiment of the magnetic tape cartridge according to the invention is directed to a specific type of magnetic tape cartridge, specifically, one designed for use with a 3.5-inch (about 89 mm) microfloppy disc-drive, it should be also appreciated that the present invention is applicable to magnetic tape cartridges compatible with disc-drives of any size. Although the magnetic tape cartridge to be described employs a magnetic tape having two ends respectively wound around supply and take-up reels, the magnetic tape cartridge may alternatively employ an endless-loop-type tape.

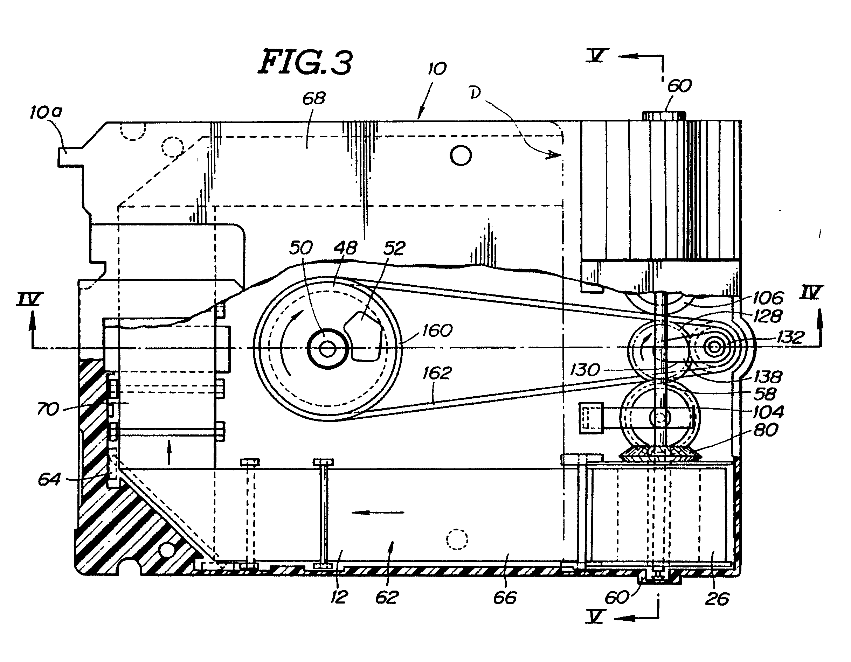

The magnetic tape cartridge 10 has a magnetic tape 12 housed within the cartridge 10. The cartridge 10 is made up of an upper half 14 and a lower half 16. The upper and lower halves 14 and 16 are of equal size in plan view and are fixed together to form the cartridge 10. The cartridge 10 is of substantially the same size and shape as a microfloppy disc cartridge, but is longer than the microfloppy disc cartridge. The length of the microfloppy disc cartridge relative to the length of the cartridge 10 is illustrated by the line D in Figures 1 and 3. The cartridge 10 has an extra section 11 which accommodates tape reels and a tape drive mechanism. When this cartridge 10 is loaded into a disc-drive for which it is designed, the extra section 11 will remain outside the disc-drive, protruding from the opening of the disc-drive.

As shown in Figures 1 and 2, the cartridge 10 is further formed with a projection 10a projecting from the front end of the cartridge 10. The projection 10a serves as an indicator for the disc-drive to recognize that a magnetic tape cartridge 10 is being used.

However, it would be possible to make the cartridge 10 match the floppy disc cartridge not only in the width and thickness but also in length, if necessary.

The upper half 14 has semi-cylindrical hollow extensions 18 and 20 near its rear corners and along its rear edge ("rear" when referring to the direction of insertion into the disc-drive). The semi-cylindrical hollow extensions 18 and 20 extend upwards from the upper surface of the upper half 14 and thus define tape reel receptacles 22 and 24 receiving a supply reel 26 and a take-up reel 28. A space 30 for a power train, which will be described in detail later, is provided between the tape reel receptacles 22 and 24.

The upper and lower halves 14 and 16 have recesses 32 and 34 exposed to the outside on their upper and lower surfaces respectively. Longitudinally (with respect to the direction of insertion) elongated tape access apertures 36 and 38 are formed in the upper and lower halves 14 and 16 within the recesses 32 and 34. The tape access apertures 36 and 38 are aligned with each other to allow a disc-drive head (not shown) of a disc-drive access to the magnetic tape 12. The disc-drive can be the same as or slightly modified from that disclosed in United States patent specification 4 445 155.

The upper and lower halves 14 and 16 also have positioning holes 39 for positioning the cartridge 10 within the disc-drive. The positioning holes 39 of the upper and lower halves 14 and 16 are aligned with each other and are designed to receive a positioning pin (not shown) built into the disc-drive.

A sliding shutter 40 slidingly engages the recesses 32 and 34. The upper and lower surfaces of the sliding shutter 40 lie substantially flush with the upper and lower surfaces of the cartridge 10 as assembled. The sliding shutter 40 has longitudinally elongated apertures 42 and 44 of the same size and configuration as the tape access apertures 36 and 38 of the cartridge 10. The sliding shutter 40 is movable between a closed position (as shown in Figure 1), in which the apertures 42 and 44 are offset from the tape access apertures 36 and 38 thus hiding the magnetic tape 12, and an open position (as shown in Figure 2), in which the apertures 42 and 44 are aligned with the tape access apertures 36 and 38 to allow the disc-drive head access to the magnetic tape 12. The sliding shutter 40 is normally biased by resilient biasing means (not shown) towards the closed position and is moved to the open position when the cartridge 10 is inserted into the disc-drive.

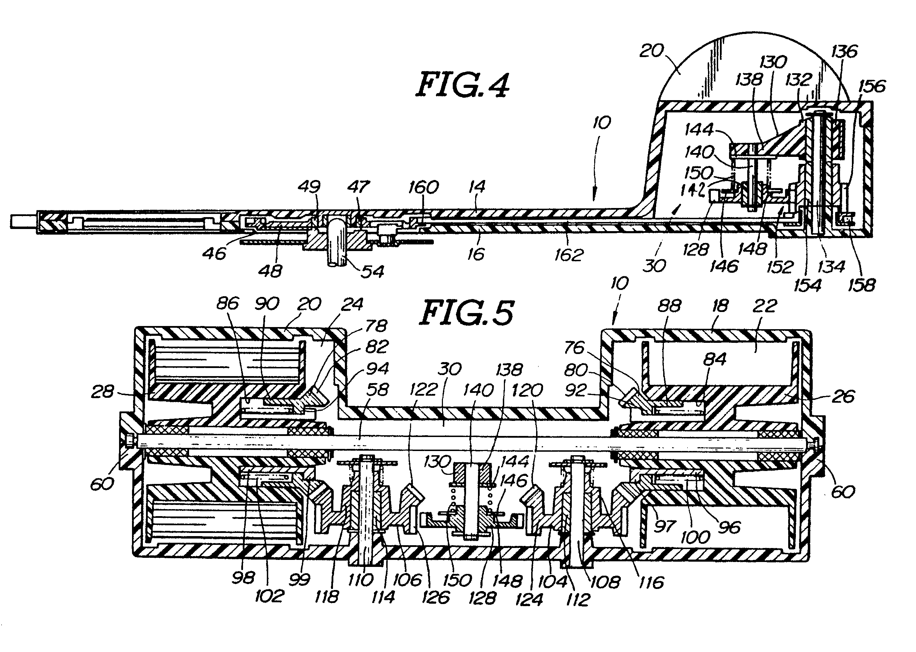

The lower half 16 also has a central aperture 46. A centre core disc 48 is rotatably mounted on a boss 47 extending from the lower surface of the upper half 14 through a bearing 49, such as an oil-less metal bearing, as shown in Figure 4. The centre core disc 48 is aligned with the central aperture 46 in the lower half 16 and is thus exposed through the central aperture 46 of the lower half 16. The centre core disc 48 has a centre positioning aperture 50 and a driving and positioning aperture 52. The driving and positioning aperture 52 is offset by a given distance from the centre positioning aperture 50. The centre positioning aperture 50 is designed to engage a disc-drive motor spindle 54. The driving and positioning aperture 52 is designed to engage a driving pin mounted on a turntable (not shown) which is driven by the motor spindle 54. The centre core disc 48 is driven by the driving force transmitted through the turntable of the disc-drive.

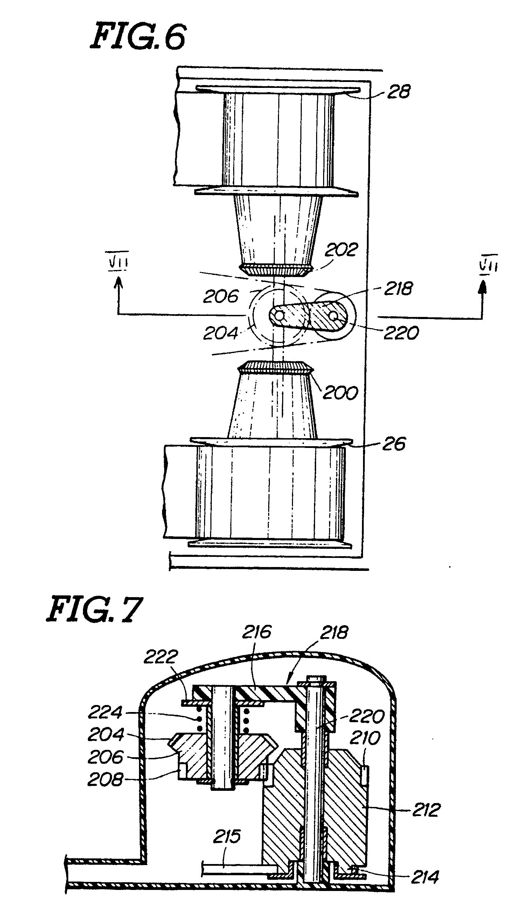

The supply and take-up reels 26 and 28 are rotatably supported by a support shaft 58, the ends of which are fixed to boss sections 60 formed on the side walls of the semi-cylindrical extensions 18 and 20 as shown in Figure 5. The supply and take-up reels 26 and 28 are mounted within the tape reel receptacles 22 and 24 with their axes lying in a transverse plane to the direction of insertion into the disc-drive. A tape run path 62 is defined within the thin space defined in the front portion of the cartridge 10 along which the magnetic tape 12 passes between the tape access apertures 36 and 38. Tape guides 64 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38. At the junctions of the first section 66 and the third section 70, and of the second section 68 and the third section 70, the tape guides 64 are provided to deflect the magnetic tape 12.

In this disclosure, the word "longitudinal" used in connection with the tape run path 62 means the axis of movement along the first and second sections 66 and 68 of the tape run path 62 and the word "lateral" used in connection with the tape run path 62 means the axis of movement along the third section 70 of the tape run path 62.

The upper and lower halves 14 and 16 have circular openings 72 and 74 opposing the first and second sections 66 and 68 of the tape run path 62. Through the openings 72 and 74, the tape run path 62 can be monitored to detect the presence or absence of the magnetic tape 12. Suitable tape monitoring mechanisms are known per se in tape recording and/or reproducing apparatus.

In order selectively to drive the supply reel 26 and the take-up reel 28 for recording and/or reproduction in the forward and reverse directions, the cartridge 10 is provided with a specially designed tape drive mechanism. In general, the take-up reel 28 is driven to extract the magnetic tape 12 from the supply reel 26 through the tape run path 62 during recording and reproduction. This tape direction will be hereafter referred to as "forward". The supply reel 26 must be driven to extract the magnetic tape 12 from the take-up reel 28 during rewinding. The supply reel 26 drives the magnetic tape 12 through the tape run path 62 in the direction opposite to the forward direction which will hereafter be referred to as "reverse".

The tape drive mechanism includes a pair of bevel gear blocks 76 and 78 as shown in Figures 4 and 5. The bevel gear blocks 76 and 78 are generally cylindrical and have bevel gears 80 and 82 respectively at one end thereof. The bevel gear blocks 76 and 78 are co-axially mounted on the mutually opposing axial ends of the supply reel 26 and the take-up reel 28. In practice, as best shown in Figure 5, the supply reel 26 and the take-up reel 28 are formed with annular grooves 84 and 86. The cylindrical sections 88 and 90 of the bevel gear blocks 76 and 78 are inserted into the annular grooves 84 and 86 of the supply reel 26 and the take-up reel 28. Annular projections 92 and 94 are formed on the inner periphery of the cylindrical sections 88 and 90 of the bevel gear blocks 76 and 78. Cylindrical retainers 96 and 98 with flanges 97 and 99 are fitted into the annular grooves 84 and 86 so as to retain the cylindrical sections 88 and 90 of the bevel gear blocks 76 and 78 within the annular grooves 84 and 86. Compression coil springs 100 and 102 are also disposed within the annular grooves 84 and 86. One end of each of the springs 100 and 102 seat on the bottom of the annular grooves 84 and 86 and the other ends thereof seat on the annular projections 92 and 94 of the cylindrical sections 88 and 90 in order to bias the bevel gear blocks 76 and 78 against the flanges 97 and 99 of the retainers 96 and 98.

The bevel gear blocks 76 and 78 are rotatable with the supply reel 26 and the take-up reel 28. If necessary, the bevel gear blocks 76 and 78 are keyed to the inner periphery of the annular grooves 84 and 86 with suitable keying means so as to ensure rotation with the associated supply reel 26 and take-up reel 28.

A pair of intermediate gear blocks 104 and 106 are rotatably supported by gear shafts 108 and 110 extending vertically from the floor of the cartridge 10. Bearings 112 and 114 are disposed between the gear shafts 108 and 110 and cylindrical sections 116 and 118 of the intermediate gear blocks 104 and 106. The gear shafts 108 and 110 are arranged in lateral alignment at a given distance from each other. The distance between the gear shafts 108 and 110 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 continuously engage the corresponding bevel gears 80 and 82.

The intermediate gear blocks 104 and 106 also have plane gears 124 and 126 below the bevel gears 120 and 122. The plane gears 124 and 126 lie in the same horizontal plane at a given distance from each other. As set forth above, since the gear shafts 108 and 110 are separated by a distance slightly greater than or approximately equal to the outer diameter of the intermediate gear blocks 104 and 106, the distance between the plane gears 124 and 126 is slightly greater than the outer diameter thereof.

A two-way coupling gear 128 is disposed between the plane gears 124 and 126. The two-way coupling gear 128 is mounted on a pivotal base 130. The pivotal base 130 has a cylindrical base section 132 pivotally mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downwards from the pivoting arm 138. Adjacent to its lower end, the two-way coupling gear 128 is mounted on the gear shaft 140. The two-way coupling gear 128 is rotatable about the gear shaft 140. A sleeve bearing 142 is disposed between the contracting faces of the gear shaft 140 and the two-way coupling gear 128.

An annular slip plate 144 loosely engages the gear shaft 140 of the two-way coupling gear 128. Also, an annular disc-shaped spring seat 146 engages the stepped outer periphery 148 of the two-way coupling gear 128. A compression coil spring 150 is disposed between the slip plate 144 and the spring seat 146 to exert a biasing force on the slip plate 144 for frictional engagement with the lower surface of the pivoting arm 138. At the same time, the biasing force of the coil spring 150 is exerted on the two-way coupling gear 128 through the spring seat 146. The slip plate 144 and the coil spring 150 constitute a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way coupling gear 128.

A drive gear block 152 is mounted at the lower end of the pivot shaft 134 on a sleeve bearing 154. The drive gear block 152 has a drive gear 156 constantly engaging the two-way coupling gear 128. The drive gear block 152 also has a pulley 158 integrally formed with the drive gear 156. The pulley 158 is connected to a second pulley 160 integral with the centre core disc 48 by means of a driving belt 162.

It should be appreciated that the gear ratio of the tape drive mechanism is selected so as to drive the magnetic tape 12 at a speed equal to the rotation speed of a floppy disc on the same disc-drive. Specifically, the magnetic tape speed on the third section 70 of the tape run path 62 has to be equal to the rotation speed of an equivalent floppy disc, so that the disc-drive can use the same recording and reproduction operations without adjustment.

For this purpose, a conventional 3.5 Inch (about 89mm) floppy disc rotates at about 600 r.p.m. so as to be free of peak-shift errors and data drop-out. Therefore, if it is assumed that the linear velocity of the outermost track is $v_1$ and that of the innermost track is $v_2$, it is preferred that the feed rate v of the magnetic tape 12 be $v_2 < v < v_1$.

In order to drive the magnetic tape 12 forward (from the supply reel 26 onto the take-up reel 28), the turntable is driven clockwise in Figure 3. With clockwise rotation of the turntable, the centre core disc 48 is driven clockwise. The clockwise rotational force is transmitted from the second pulley 160 of the centre core disc 48 to the pulley 158 of the drive gear block 152 through the driving belt 162. Therefore, the drive gear 156 is driven clockwise in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130 due to the biasing force of the coil spring 150. The rotational force transmitted by the drive gear 156 of the drive gear block 152 to the two-way coupling gear 128 serves to drive the pivotal base 130 clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the biasing force of the coil spring 150 and so causes slip between the mating surfaces of the slip plate 144 and the pivoting arm 138. As a result, the two-way coupling gear 128 starts to rotate counter-clockwise, thereby driving the plane gear 126 of the intermediate gear block 106 clockwise. The bevel gear 122 of the intermediate gear block 106 thus rotates clockwise, which causes the bevel gear 76 to drive the take-up reel 28 to wind in the magnetic tape 12.

In order to switch from forward to reverse, the direction of rotation of the turntable is switched from clockwise to counter-clockwise as viewed in Figure 3. With counter-clockwise rotation of the turntable, the centre core disc 48 is driven counter-clockwise. The counter-clockwise rotational force is transmitted from the second pulley 160 of the centre core disc 48 to the pulley 158 of the drive gear block 152 through the driving belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the biasing force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base 130 to pivot counter-clockwise as shown in Figure 3.

Once the two-way coupling gear 128 comes into engagement with the plane gear 124 of the intermediate gear block 104, pivotal movement of the pivotal base 130 is restricted. Then, the rotational driving force transmitted by the drive gear 156 to the two-way coupling gear 128 overcomes the biasing force of the coil spring 150, causing slip between the mating surfaces of the slip plate 144 and the pivoting arm 138. As a result, the two-way coupling gear 128 starts to rotate clockwise, thus driving the plane gear 124 of the intermediate gear 104 counter-clockwise. The bevel gear 120 of the intermediate gear block 104 is thus rotated clockwise, causing the bevel gear 74 to drive the supply reel 26 to rewind the magnetic tape 12.

In the embodiment, magnetic tape 12 3/4-inch (about 19mm) wide is employed in the cartridge 10. In this case, eighty recording tracks can be formed, which corresponds to the number that can be formed on a 3.5-inch (about 89mm) floppy disc. Each track formed on the magnetic tape 12 extends longitudinally along the magnetic tape 12. It will be appreciated that the length of each track depends solely on the length of the magnetic tape 12 and so can be substantially longer than the length of the recording tracks formed on 3.5-inch (about 89mm) floppy discs. In general, the capacity of each track on the magnetic tape 12 will be several tens of times greater than that of a track on a floppy disc. If the magnetic tape 12 is 12m long, the capacity of the cartridge 10 will be approximately 20 megabyte.

It will be appreciated that the magnetic tape 12 employed in the cartridge 10 can be tracked by means of conventional tracking mechanisms employed in known disc-drives.

As will be appreciated, such embodiments of magnetic tape cartridge can provide a very large data storage capacity. Therefore, such cartridges are suitable for use as backup storage for hard-discs or floppy discs. Furthermore, they can be utilized in a filing system which requires high-capacity memory media.

Figures 6 and 7 show another tape drive mechanism for a cartridge 10. In this example the intermediate gear blocks used in the former example are removed so that bevel gears 200 and 202 are coaxial and co-rotational with the supply reel 26 and the take-up reel 28 and are driven directly by a bevel gear 204 on a two-way coupling gear block 206.

The two-way coupling gear block 206 also has a plane gear 208 continuously engaging a drive gear 210 of a drive gear blok 212. The drive gear block 212 also has a pulley 214 at its lower end, which pulley 214 is drivingly connected with the pulley integral with the centre core disc by means of a drive belt 215.

As in the above-described tape drive mechanism the two-way coupling gear block 206 is rotatably mounted on a pivoting arm 216 of a pivotal base 218 which is pivotally mounted on a pivot shaft 220, which also pivotally supports the drive gear block 212. A clutch mechanism comprising a slip plate 222 and a coil spring 224 causes pivotal movement of the pivotal base 218 according to the driving direction of the centre core disc, whereby the bevel gear 204 of the two-way coupling gear 206 selectively engages one of the bevel gears 200 and 202.

As will be easily appreciated, the tape drive mechanism described above has a simpler structure than the first described example.

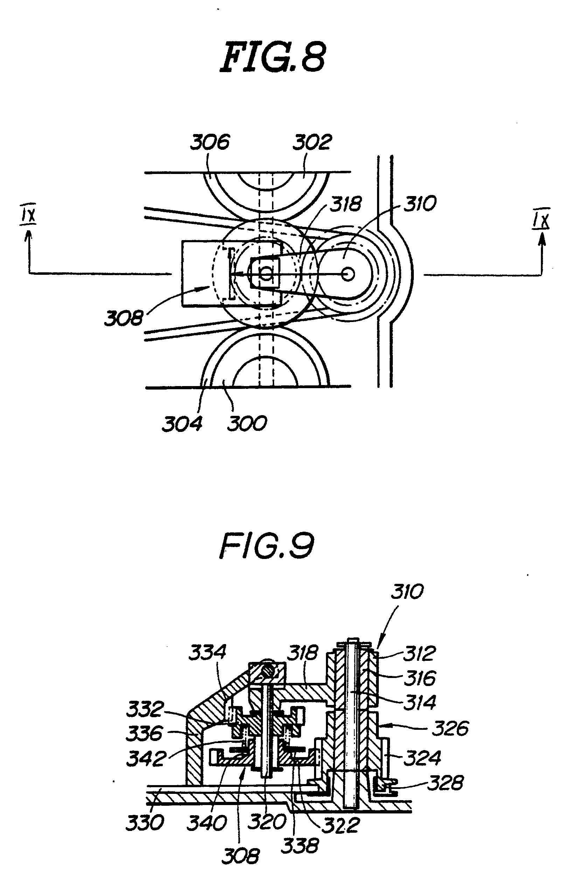

Figures 8 and 9 show a further tape drive mechanism employable in a cartridge according to the invention. In this example, a rack-and-pinion mechanism provides the change-over mechanism for changing the driving direction of the magnetic tape 12.

As in the example of Figures 4 and 5, a pair of intermediate gear blocks 300 and 302 are rotatably supported by gear shafts extending vertically from the floor of the cartridge 10. The intermediate gear blocks 300 and 302 have bevel gears 304 and 306 and plane gears below the bevel gears. The plane gears lie a given distance apart in the same horizontal plane.

A two-way coupling gear assembly 308 is disposed between the intermediate gear blocks 300 and 302. The two-way coupling gear assembly 308 is mounted on a pivotal base 310. The pivotal base 310 has a cylindrical base section 312 pivotally mounted on an upper portion of a pivot shaft 314 extending vertically from the floor of the cartridge 10. A sleeve bearing 316 interposed between the inner periphery of the cylindrical base section 312 and the outer periphery of the pivot shaft 314 allows pivotal movement of the pivotal base 310. The pivotal base 310 also has a pivoting arm 318. A gear shaft 320 extends downwards from the pivoting arm 318. The gear shaft 320 carries the two-way coupling gear 322 of the two-way coupling gear assembly 308 at its lower end. The two-way coupling gear 322 is free to rotate about the gear shaft 320 and continuously engages a drive gear 324 of a drive gear block 326 which also has a pulley 328 drivingly connected by means of a drive belt 330 to a pulley integral with the centre core disc. The two-way coupling gear assembly 308 also has a pinion gear 332 rotatably mounted on the gear shaft 320. The pinion gear 332 continuously engages rack teeth 334 formed on a rack plate 336 projecting from the floor of the cartridge 10.

An annular slip plate 338 engages the stepped section 340 of the two-way coupling gear 322. A compression coil spring 342 seated between the slip plate 338 and the pinion gear 332 exerts a biasing force on the slip plate 338 for frictional engagement with the mating surface of the two-way coupling gear 322. The slip plate 338 and the coil spring 342 constitute a clutch mechanism for connecting and releasing the pinion gear 332 from the two-way coupling gear 322.

With the construction described above, as long as the two-way coupling gear 322 is free from the plane gear of the intermediate gear block 300, the slip plate 338 is held in frictional engagement with the mating surface of the two-way coupling gear 322 by the biasing force of the coil spring 342. This frictional engagement between the slip plate 338 and the two-way coupling gear 322 causes rotation of the pinion gear 332 according to the direction of rotation of the two-way coupling gear 322. The pinion gear 332 thus travels laterally along the rack teeth 334 of the rack plate 336, causing pivotal movement of the pivotal base 310 which shifts the two-way coupling gear 322 towards one of the intermediate gear blocks 300 or 302.

Once the two-way coupling gear 322 comes into engagement with the plane gear of one of the intermediate gear blocks 300 or 302, pivotal movement of the pivotal base 310 is restricted. Then the rotational driving force transmitted by the drive gear 324 to the two-way coupling gear 322 overcomes the biasing force of the coil spring 342, causing slipping between the mating surfaces of the slip plate 338 end the two-way coupling gear 322. As a result, the pinion gear 332 is disconnected from the two-way coupling gear 322, which prevents the pivotal base 310 from pivoting further towards the corresponding intermediate gear assembly 300 or 302.

As will be appreciated, since the pinion gear 332 engages the rack teeth 334 at a position remote from the pivot shaft 314, the frictional force needed to establish interconnection between the pinion gear 332 end the two-way coupling gear 322 is relatively small, thereby limiting the loss of driving torque.

## Claims

1. A magnetic tape cartridge (10) comprising

    means (64) for defining a tape run path (62) for passing a magnetic tape (12) across a disc-drive head of a disc-drive for transferring data between said magnetic tape (12) and said disc-drive head;

    first and second reels (26 and 28) provided at respective ends of said tape run path (62) and having wound therearound said magnetic tape (12) for feeding said magnetic tape (12) from one of said reels (26, 28) to the other/and

    means (76, 116, 120, 128, 132) for selectively driving one of said first and second reels (26, 28) for winding said magnetic tape (12) thereon from the other reel (26,28), said driving means (76, 116, 120, 128, 132) including a first toothed gear (76) provided for rotation with said first reel (26), a second toothed gear (78) provided for rotation with said second reel (28) and a third toothed gear (128) connectable to a drive mechanism of said disc-drive to be driven by a driving force of said drive mechanism and arranged selectively to co-operate with one of said first and second toothed gears (76, 78) depending upon the driving direction of said drive mechanism.

2. A magnetic tape cartridge (10) according to claim 1, which further comprises means (48, 160, 162, 150) for transmitting aid driving force of said drive mechanism of said disc-drive to said third toothed gear (128).

3. A magnetic tape cartridge (10) according to claim 2 wherein said driving force transmitting means (48, 160, 162, 150) includes a rotary disc member (48) rotatable with a turntable of said drive mechanism about a common rotational axis thereof, and said third toothed gear (128) is rotatable about an axis substantially parallel to said common axis of said rotary disc member (48) and said turntable.

4. A magnetic tape cartridge (10) according to claim 3 which further comprises means (130, 138) for converting said rotational force of said third gear (128) to a force for shifting said third toothed gear (128) between said first and second toothed gears (104, 106).

5. A magnetic tape cartridge (10) according to claim 1 wherein said reel driving means includes means for converting rotation of a third toothed gear carrier assembly (130, 132, 138) about a rotational axis thereof into rotation of a co-operating one of said first and second toothed gears (76, 78, 104, 106) about an axis extending substantially perpendicular to said rotational axis of said third toothed gear (128), said first and second toothed gears, (76, 78, 104, 106) being rotatable about common axes corrresponding to the rotational axes of said first and second reels (26, 28).

6. A magnetic tape cartridge (10) according to claim 4 wherein said third toothed gear (128) is rotatably mounted on a pivotal base (130) pivotable about a pivot axis, said third toothed gear (128) co-operating with means (144, 150) for restricting said rotation of said third toothed gear (128) whereby the driving force of said drive mechanism is convertable into a force for causing pivotal movement of said pivotal base (130) carrying said third toothed gear (128).

7. A magnetic tape cartridge (10) according to claim 6 wherein said restricting means (144, 150) is responsive to a resistance created by engagement of said third toothed gear (128) with one of said first and second toothed gears (104, 106), said resistance against pivotal movement of said pivotal base (130) carrying said third toothed gear (128) includes a clutch mechansim (144, 150) for releasing said third toothed gear (128) from said restriction to allow said third toothed gear (128) to rotate and drive one of first and second toothed gears (104, 106) with which said third toothed gear (128) is engageable.

8. A magnetic tape cartridge (10) according to claim 4 wherein said rotational force converting means (324, 328, 332) comprises a pinion gear (332) releasably coupled to said third toothed gear (322) and engageable with a rack plate (336) extending along a radius of shifting of said third toothed gear (322), said pinion gear (332) being maintained in a coupled condition with a third toothed gear carrier assembly (308) during shifting of said third toothed gear (322) when said third toothed gear (322) engages one of said first and second toothed gears (300, 302) at the end of the shifting of said third toothed gear (322).

9. A magnetic tape cartridge (10) according to claim 5 wherein said rotation converting means comprises said first and second toothed gears (76, 78) having bevel gears (80, 82), intermediate gears (104, 106) and plane gear sections (124, 126) engageable with said third toothed gear (128) to be driven by said third toothed gear (128) and bevel gear sections (120, 122) continuously engaging said first and second toothed gears (76, 78) for transmitting said driving force from said drive mechanism through said third toothed gear carrier assembly (128, 130, 138) to said first and second toothed gears (76, 78).

10. A magnetic tape cartridge (10) according to claim 5 wherein said rotation converting means comprises a bevel gear section (204) formed on said third toothed gear (206) and bevel gears forming said first and second toothed gears (200, 202).

11. A magnetic tape cartridge (10) according to claim 1 wherein said cartridge (10) has a first section (14, 16) of substantially the same size and configuration as a corresponding size of floppy disc and said tape run path (62) is defined in said cartridge (10) extending across a position (36, 38) at which data are transferable between a magnetic tape (12) and a disc-drive head, and wherein said reels (26, 28) are disposed about an axis extending laterally with respect to said cartridge (10) in a space (30) defined in a second section (11) of said cartridge (10), said first toothed gear (76) is coupled with said supply reel (26), said second toothed gear (78) is coupled with said take-up reel (28), and said third toothed gear (128) cooperates with a power train (48, 150, 158, 128) for selectively transmitting a driving force from a disc-drive to one of said first and second toothed gears (76, 78), said third toothed gear (128) being movable between a first position where said driving force may be transmitted to said first toothed gear (76) and a second position where said driving force may be transmitted to said second toothed gear (78), said third toothed gear (128) being responsive to a rotational driving force rotatably to drive said third toothed gear (78) in a first direction to shift to said first position and to a rotation driving force rotatably to drive said third toothed gear (128) in a second direction to shift to said second position.

12. A magnetic tape cartridge (10) according to claim 11 wherein said third toothed gear (128) of said power train (48, 150, 158, 128) is mounted on a pivotal base (130) capable of shifting between said first and second positions.

13. A magnetic tape cartridge (10) according to claim 12 wherein said third toothed gear (128) is associable with means for restricting rotation of said pivotal base (130) in order to convert said rotational driving force of said disc-drive into a force causing pivotal movement of said third toothed gear (128) between said first and second positions.

14. A magnetic tape cartridge (10) according to claim 1 wherein said cartridge (10) is hollow and includes a first section (14, 16) insertable into a disc-drive and a second section (11) for storing said magnetic tape (12), and said tape run path (62) is defined within said first section (14, 16) of said cartridge (10) so as to extend across a location (36, 38) at which a disc-drive head of said disc-drive can transfer data between said magnetic tape (12) and said disc-drive head; and said cartridge (10) further includes tape guide means (64) for feeding said magnetic tape (12) along said tape run path (62) in mutually opposite first and second directions, and wherein said third toothed gear (128) is movable between a first position for engaging with said first toothed gear (76) and a second toothed gear (78) according to operation of shifting means (130, 138) operable to shift said third toothed gear (128) between said first and second positions depending upon the driving direction of said driving means (76, 116, 120, 128, 132, 162).

15. A magnetic cartridge (10) according to claim 14 wherein tape run path defining means (64) comprises means for aligning said cartridge (10) with said disc-drive when said cartridge (10) is loaded into said disc-drive, and means (64) for guiding said magnetic tape (12) within said cartridge (10) such that, when said cartridge (10) is aligned with said disc-drive, said magnetic tape (12) is registered with a location (36, 38) at which data can be transferred between said magnetic tape (12) and said disc-drive head.

16. A magnetic tape cartridge (10) according to claim 14 wherein within said first section (14, 16) of said cartridge (10), said guide means comprises a plurality of twist tape guides (64), said magnetic tape (12) wrapping about each of said twist tape guides (64) by substantially 180 degrees to change the direction of feed of said magnetic tape (12) by substantially 180 degrees so that said magnetic tape (12) feeds through said first section (14, 16) which has a disc-like shape suitable for insertion into said disc-drive.

17. A magnetic tape cartridge (10) according to claim 14 comprising a first tape reel (26) and a second tape reel (28) between which said magnetic tape (12) is wound, said first and second tape reels (26, 28) being rotatable about a rotational axis extending laterally and horizontally with respect to said cartridge (10).

18. A magnetic tape cartridge (10) according to claim 17 wherein tape feeding means (26, 28, 64) comprises a power train (48, 150, 152, 128) for transmitting a driving force from a drive motor incorporated in said disc-drive to said third toothed gear (128), said power train (48, 150, 152, 128) including a clutch mechanism (144, 150) for releasably engaging said third toothed gear (128) with said third toothed gear shifting means (128, 130, 138).

19. A magnetic tape cartridge (10) according to claim 17 wherein said first and second gears (104, 106) are engaged with first and second tape reels (26, 28) for rotation therewith about said laterally and horizontally extending rotation axis, and said tape feeding means (26, 28, 64) includes means (130, 138) for converting rotation of said third toothed gear (128) about a rotational axis extending vertically into a rotation of a co-operating one of said first and second toothed gears (104, 106) about said laterally and horizontally extending axis.

20. A magnetic tape cartridge (10) according to claim 19 wherein said rotation converting means comprises a bevel gear section formed on said third toothed gear (322) and bevel gears (304, 306) formed on said first and second toothed gears (300, 302).

21. A magnetic tape cartridge (10) according to claim 8 wherein at the end of shifting of said third toothed gear (322), said pinion gear (332) is released from said third toothed gear (322) when said third toothed gear (322) is engages with one of said first and second toothed gear (300, 302).

**Revendications**

1. Cartouche (10) de bande magnétique, comprenant

un dispositif (64) destiné à délimiter un trajet (62) de défilement de bande destiné au passage d'une bande magnétique (12) devant une tête d'un dispositif d'entraînement de disque destinée à transférer des données entre la bande magnétique (12) et la tête,

une première et une seconde bobine (26 et 28) placées aux extrémités respectives du trajet (62) de défilement de bande et autour desquelles est enroulée la bande magnétique (12) de manière que la bande magnétique (12) avance de l'une des bobines (26, 28) à l'autre, et

un dispositif (76, 116, 120, 128, 132) destiné à entraîner sélectivement l'une des première et seconde bobines (26, 28) afin que la bande magnétique (12) s'enroule sur elle depuis l'autre bobine (26, 28), le dispositif d'entraînement (76, 116, 120, 128, 132) comprenant un premier pignon (76) destiné à tourner avec la première bobine (26), un second pignon (78) destiné à tourner avec la seconde bobine (28) et un troisième pignon (128) qui peut être raccordé à un mécanisme d'entraînement du dispositif d'entraînement de disque afin qu'il soit entraîné par une force d'entraînement du mécanisme d'entraînement et destiné à coopérer sélectivement avec l'un des premier et second pignons (76, 78) suivant le sens d'entraînement du mécanisme d'entraînement.

2. Cartouche (10) de bande magnétique selon la revendication 1, qui comporte en outre un dispositif (48, 160, 162, 150) destiné à transmettre la force d'entraînement du mécanisme d'entraînement du dispositif d'entraînement de disque au troisième pignon (128).

3. Cartouche (10) de bande magnétique selon la revendication 2, dans laquelle le dispositif (48, 160, 162, 150) de transmission d'une force d'entraînement comprend un organe (48) à disque rotatif qui est destiné à tourner avec un plateau tournant du mécanisme d'entraînement autour d'un axe commun de rotation, et le troisième pignon (128) est destiné à tourner autour d'un axe sensiblement parallèle à l'axe commun à l'organe (48) à disque rotatif et au plateau tournant.

4. Cartouche (10) de bande magnétique selon la revendication 3, qui comporte en outre un dispositif (130, 138) destiné à transformer la force de rotation du troisième pignon (128) en une force de déplacement du troisième pignon (128) entre le premier et le second pignon (104, 106).

5. Cartouche (10) de bande magnétique selon la revendication 1, dans laquelle le dispositif d'entraînement de bobine comporte un dispositif destiné à transformer la rotation d'un ensemble (130, 132, 138) de support du troisième pignon autour d'un axe de rotation en une rotation d'un pignon coopérant, choisi parmi le premier et le second pignon (76, 78, 104, 106), autour d'un axe sensiblement perpendiculaire à l'axe de rotation du troisième pignon (128), le premier et le second pignon (76, 78, 104, 106) pouvant tourner autour d'axes communs correspondant aux axes de rotation de la première et de la seconde bobine (26, 28).

6. Cartouche (10) de bande magnétique selon la revendication 4, dans laquelle le troisième pignon (128) est monté afin qu'il puisse tourner sur une base pivotante (130) qui peut pivoter autour d'un axe de pivotement, le troisième pignon (128) coopérant avec un dispositif (144, 150) destiné à limiter la rotation du troisième pignon (128) de manière que la force d'entraînement du mécanisme d'entraînement puisse être transformée en une force destinée à provoquer un mouvement de pivotement de la base pivotante (130) qui porte le troisième pignon (128).

7. Cartouche (10) de bande magnétique selon la revendication 6, dans laquelle le dispositif de limitation (144, 150) est sensible à une résistance créée par coopération du troisième pignon (128) avec l'un des premier et second pignons (104, 106), la résistance opposée au pivotement de la base pivotante (130) portant le troisième pignon (128) étant due à un mécanisme d'embrayage (144, 150) destiné à libérer le troisième pignon (128) de la limitation afin que le troisième pignon (128) puisse tourner et entraîner l'un des premier et second pignons (104, 106) avec lequel le troisième pignon (128) peut être en prise.

8. Cartouche (10) de bande magnétique selon la revendication 4, dans laquelle le dispositif (324, 328, 332) de transformation de la force de rotation comprend un pignon (332) couplé de façon temporaire au troisième pignon (322) et destiné à coopérer avec une plaque (336) à crémaillère disposée suivant un arc de déplacement du troisième pignon (322), le pignon (332) étant maintenu à l'état couplé à un ensemble (308) de support du troisième pignon pendant le déplacement du troisième pignon (322) lorsque le troisième pignon (322) coopère avec l'un des premier et second pignons (300, 302) à la fin du déplacement du troisième pignon (322).

9. Cartouche (10) de bande magnétique selon la revendication 5, dans laquelle le dispositif de transformation de rotation comprend un premier et un second pignon (76, 78) ayant des pignons coniques (80, 82), des pignons intermédiaires (104, 106) et des tronçons de pignon plan (124, 126) destinés à coopérer avec le troisième pignon (128) afin qu'ils soient entraînés par le troisième pignon (128), les tronçons de pignon conique (120, 122) étant constamment en prise avec les premier et second pignons (76, 78) afin qu'ils transmettent la force d'entraînement du mécanisme d'entraînement par l'intermédiaire de l'ensemble (128, 130, 138) de support du troisième pignon aux premier et second pignons (76, 78).

10. Cartouche (10) de bande magnétique selon la revendication 5, dans laquelle le dispositif de transformation de rotation comprend un tronçon (204) de pignon conique formé sur le troisième pignon (206) et des pignons coniques formant le premier et le second pignon (200, 202).

11. Cartouche (10) de bande magnétique selon la revendication 1, dans laquelle la cartouche (10) a un premier tronçon (14, 16) ayant pratiquement la même configuration et la même dimension qu'une disquette de dimension correspondante, et le trajet (62) de défilement de bande est délimité dans la cartouche (10) devant une position (36, 38) à laquelle des données peuvent être transférées entre une bande magnétique (12) et une tête d'un dispositif d'entraînement de disque, et les bobines (26, 28) sont disposées autour d'un axe orienté latéralement par rapport à la cartouche (10) dans un espace (30) qui est délimité dans un second tronçon (11) de la cartouche (10), le premier pignon (76) est couplé à la bobine débitrice (26), le second pignon (78) est couplé à la bobine réceptrice (28), et le troisième pignon (128) coopère avec un train moteur (48, 150, 158, 128) destiné à transmettre sélectivement une force d'entraînement d'un dispositif d'entraînement de disque à l'un des premier et second pignons (76, 78), le troisième pignon étant mobile entre une première position dans laquelle la force d'entraînement peut être transmise au premier pignon (76) et une seconde position à laquelle la force d'entraînement peut être transmise au second pignon (78), le troisième pignon (128) étant commandé par une force d'entraînement en rotation, qui entraîne le troisième pignon (78) en rotation dans un premier sens afin qu'il se déplace vers la première position, et par une force d'entraînement en rotation, qui entraîne le troisième pignon (128) dans un second sens afin qu'il se déplace vers la seconde position.

12. Cartouche (10) de bande magnétique selon la revendication 11, dans laquelle le troisième pignon (128) du train moteur (48, 150, 158, 128) est monté sur une base pivotante (130) qui peut se déplacer entre une première et une seconde position.

13. Cartouche (10) de bande magnétique selon la revendication 12, dans laquelle le troisième pignon (128) est destiné à être associé à un dispositif destiné à limiter la rotation de la base pivotante (130) afin que la force d'entraînement en rotation du dispositif d'entraînement de disque soit transformée en une force provoquant un mouvement de pivotement du troisième pignon (128) entre la première et la seconde position.

14. Cartouche (10) de bande magnétique selon la revendication 1, dans laquelle la cartouche (10) est creuse et a un premier tronçon (14, 16) destiné à être introduit dans un dispositif d'entraînement de disque et un second tronçon (11) destiné à contenir la bande magnétique (12), et le trajet (62) de défilement de bande est délimité dans le premier tronçon (14, 16) de la cartouche (10) afin qu'elle passe sur un emplacement (36, 38) auquel une tête du dispositif d'entraînement de disque peut transférer les données entre la bande magnétique (12) et la tête d'entraînement de disque, et la cartouche (10) comporte en outre un dispositif (64) de guidage de bande destiné à faire avancer la bande magnétique (12) le long du trajet (62) de défilement de bande dans un premier et un second sens opposés, et dans laquelle le troisième pignon (128) est mobile entre une première position de coopération avec le premier pignon (76) et un second pignon (78) d'après le fonctionnement du dispositif de déplacement (130, 138) destiné à déplacer le troisième pignon (128) entre la première et la seconde position en fonction du sens d'entraînement du dispositif d'entraînement (76, 116, 120, 128, 132, 162).

15. Cartouche (10) de bande magnétique selon la revendication 14, dans laquelle le dispositif (64) destiné à délimiter le trajet de défilement de bande comporte un dispositif d'alignement de la cartouche (10) sur le dispositif d'entraînement de disque lorsque la cartouche (10) est chargée dans le dispositif d'entraînement de disque, et un dispositif (64) de guidage de la bande magnétique (12) dans la cartouche (10) afin que, lorsque la cartouche (10) est alignée sur le dispositif d'entraînement de disque, la bande magnétique (12) soit en position par rapport à un emplacement (36, 38) auquel des données peuvent être transférées entre la bande magnétique (12) et la tête d'entraînement de disque.

16. Cartouche (10) de bande magnétique selon la revendication 14, dans laquelle, à l'intérieur du premier tronçon (14, 16) de la cartouche (10), le dispositif de guidage comporte plusieurs guides (64) d'une bande repliée, la bande magnétique (12) s'enroulant sur chacun des guides (64) de bande sur 180° pratiquement et changeant de direction d'avance de bande magnétique (12) de 180° pratiquement, si bien que la bande magnétique (12) avance dans le premier tronçon (14, 16) qui a une forme analogue à celle d'un disque et qui peut être introduit dans le dispositif d'entraînement de disque.

17. Cartouche (10) de bande magnétique selon la revendication 14, comprenant une première bobine (26) et une seconde bobine (28) de bande entre lesquelles est enroulée la bande magnétique (12), la première et la seconde bobine (26, 28) étant destinées à tourner autour d'un axe de rotation disposé latéralement et horizontalement par rapport à la cartouche (10).

18. Cartouche (10) de bande magnétique selon la revendication 17, dans laquelle le dispositif (26, 28, 64) d'avance de bande comprend un train moteur (48, 150, 152, 128) destiné à transmettre une force d'entraînement d'un moteur incorporé au dispositif d'entraînement de disque au troisième pignon (128), le train moteur (48, 150, 152, 128) comprenant un mécanisme d'embrayage (144, 150) destiné à mettre en coopération temporaire le troisième pignon (128) et le dispositif (128, 130, 138) de déplacement du troisième pignon.

19. Cartouche (10) de bande magnétique selon la revendication 17, dans laquelle le premier et le second pignon (104, 106) sont en coopération avec la première et la seconde bobine (26, 28) de bande afin qu'ils tournent avec elles autour de l'axe de rotation disposé latéralement et horizontalement, et le dispositif (26, 28, 64) d'avance de bande comporte un dispositif

13

(130, 138) destiné à transformer la rotation du troisième pignon (128) autour d'un axe de rotation disposé verticalement en une rotation d'un pignon coopérant parmi le premier et le second pignon (104, 106) autour de l'axe disposé latéralement et horizontalement.

20. Cartouche (10) de bande magnétique selon la revendication 19, dans laquelle le dispositif de transformation de rotation comprend un tronçon de pignon conique formé sur le troisième pignon (322) et des pignons coniques (304, 306) formés sur le premier et le second pignon (300, 302).

21. Cartouche (10) de bande magnétique selon la revendication 8, dans laquelle, à la fin du déplacement du troisième pignon (322), le pignon (332) est séparé du troisième pignon (322) lorsque le troisième pignon (322) est en prise avec l'un des premier et second pignons (300, 302).

**Patentansprüche**

1. Magnetbandkassette (10), die umfaßt:
ein Mittel (64) zum Definieren eines Bandlaufweges (62) zum Transportieren eines Magnetbandes (12) über den Magnetplattenlaufwerkkopf eines Magnetplattenlaufwerks hinweg zum Zwecke des Übertragens von Daten zwischen dem Magnetband (12) und dem Magnetplattenlaufwerkkopf,
erste und zweite Bandrollen (26 u. 28), die an betreffenden Enden des Bandlaufweges (62) vorgesehen sind und um sich herumgewickelt das Magnetband (12) zum Vorbewegen des Magnetbandes (12) von einer der Bandrollen (26, 28) zu der anderen tragen, und
ein Mittel (76, 116, 120, 128, 132) zum selektiven Antreiben einer der ersten und zweiten Bandrollen (26, 28) zum Aufwickeln des Magnetbandes (12) auf diese von der anderen Bandrolle (26, 28) herab, wobei das antreibende Mittel (76, 116, 120, 128, 132) ein erstes mit Zähnen versehenes Getrieberad (76), das zur Drehung mit der ersten Bandrolle (26) vorgesehen ist, ein zweites mit Zähnen versehenes Getrieberad (78), das zur Drehung mit der zweiten Bandrolle (28) vorgesehen ist, und ein drittes mit Zähnen versehenes Getrieberad (128) umfaßt, das mit einem Antriebsmechanismus des Magnetplattenlaufwerks verbindbar ist, um durch eine Antriebskraft des Antriebsmechanismus angetrieben zu werden, und das wahlweise so angeordnet wird, daß es mit einem der ersten und zweiten mit Zähnen versehenen Getrieberäder (76, 78) abhängig von der Antriebsrichtung des Antriebsmechanismus zusammenzuwirkt.

2. Magnetbandkassette (10) nach Anspruch 1, die ferner ein Mittel (48, 160, 162, 150) zum Übertragen der Antriebskraft des Antriebsmechanismus des Magnetplattenlaufwerks auf das dritte mit Zähnen versehene Getrieberad (128) umfaßt.

3. Magnetbandkassette (10) nach Anspruch 2, bei der das Antriebskraftübertragungsmittel(48, 160, 162, 150) ein drehendes Plattenelement (48) enthält, das mit einem Drehteller des Antriebsmechanismus um eine gemeinsame Drehachse derselben drehbar ist, und daß das dritte mit Zähnen versehene Getrieberad (128) um eine Achse drehbar ist, die im wesentlichen parallel zu der gemeinsamen Achse des drehenden Plattenelements (48) und des Drehtellers liegt.

4. Magnetbandkassette (10) nach Anspruch 3, die ferner ein Mittel (130, 138) zum Umsetzen der Drehkraft des dritten mit Zähnen versehenen Getrieberades (128) in eine Kraft zum Verlagern des dritten mit Zähnen versehenen Zahnrades (128) zwischen dem ersten und dem zweiten mit Zähnen versehenen Getrieberad (104, 106) umfaßt.

5. Magnetbandkassette (10) nach Anspruch 1, bei der das Mittel zum Antreiben der Bandrollen ein Mittel enthält zum Umsetzen der Drehung eines Trägeraufbaus (130, 132, 138) für das dritte mit Zähnen versehenen Getrieberad um eine Drehachse desselben in eine Drehung eines damit zusammenwirkenden der ersten und zweiten mit Zähnen versehenen Getrieberäder (76, 78, 104, 106) um eine Achse, die sich im wesentlichen senkrecht zu der Drehachse des dritten mit Zähnen versehenen Getrieberades (128) erstreckt, wobei die ersten und zweiten mit Zähnen versehenen Getrieberäder (76, 78, 104, 106) um eine gemeinsame Achse entsprechend der Drehachse der ersten und der zweiten Bandrolle (26, 28) drehbar sind.

6. Magnetbandkassette (10) nach Anspruch 4, bei der das dritte mit Zähnen versehene Getrieberad (128) drehbar auf einer als Drehpunkt dienenden Basis (130) montiert ist, die um eine Schwenkachse schwenkbar ist, wobei das dritte mit Zähnen versehene Getrieberad (128) mit einem Mittel (144, 150) zum Einschränken der Drehung des dritten mit Zähnen versehenen Getrieberades (128) zusammenwirkt, wodurch die Antriebskraft des Antriebsmechanismus in eine Kraft zum Bewirken einer Schwenkbewegung der als Drehpunkt dienenden Basis (130) umsetzbar ist, die das dritte mit Zähnen versehene Getrieberad (128) trägt.

7. Magnetbandkassette (10) nach Anspruch 6, bei der das Mittel zum Einschränken (144, 150) auf einen Widerstand anspricht, der durch Eingreifen des dritten mit Zähnen versehenen Getrieberades (128) in eines der ersten und zweiten mit Zähnen versehenen Getrieberäder (104, 106) erzeugt wird, wobei der Widerstand gegen eine Schwenkbewegung der als Drehpunkt dienenden Basis (130), die das dritte mit Zähnen versehene Getrieberad (128) trägt, einen Kupplungsmechanismus (144, 150) zum Freigeben des dritten mit Zähnen versehenen Getrieberades (128) aus der Einschränkung enthält, um dem dritten mit Zähnen versehenen Getrieberad (128) zu gestatten, sich zu drehen und eines der ersten und zweiten mit Zähnen versehenen Getrieberäder (104, 106) anzutreiben, mit denen das dritte mit Zähnen versehene Getrieberad (128) in Eingriff treten kann.

8. Magnetbandkassette (10) nach Anspruch 4, bei der das Mittel (324, 328, 332) zum Umsetzen der Drehkraft ein Ritzel (332) umfaßt, das lösbar mit dem dritten mit Zähnen versehenen Getrieberad (322) gekuppelt ist und in eine mit Zähnen versehene Platte (336) eingreifen kann, die sich längs eines Radius der Verlagerung des dritten mit Zähnen versehenen Getrieberades (322) erstreckt, wobei das Ritzel (332) während des Verlagerns des dritten mit Zähnen versehenen Getrieberades (322) in einem gekuppelten Zustand mit einem Trägeraufbau (308) für das dritte mit Zähnen versehene Getrieberad gehalten wird, wenn das dritte mit Zähnen versehene Getrieberad (322) am Ende des Verschiebens des dritten mit Zähnen versehenen Getrieberades (322) in eines der ersten und zweiten mit Zähnen versehenen Zahnräder (300, 302) eingreift.

9. Magnetbandkassette (10) nach Anspruch 5, bei der das Mittel zum Umsetzen der Drehung das erste und das zweite mit Zähnen versehene Getrieberad (76, 78) umfaßt und Kegelgetrieberäder (80, 82), Zwischengetrieberäder (104, 106) und ebene Getriebeabschnitte (124, 126), die in das dritte mit Zähnen versehene Getrieberad (128) eingreifen können, um durch das dritte mit Zähnen versehene Getrieberad (128) angetrieben zu werden, sowie Kegelgetrieberadabschnitte (120, 122) hat, die ununterbrochen in das erste und das zweite mit Zähnen versehene Getrieberad (76, 78) zum Übertragen der Antriebskraft von dem Antriebsmechanismus durch den Trägeraufbau (128, 130, 138) für das dritte mit Zähnen versehene Getrieberad auf die ersten und zweiten mit Zähnen versehenen Getrieberäder (76, 78) eingreifen.

10. Magnetbandkassette (10) nach Anspruch 5, bei der das Mittel zum Umsetzen der Drehung einen Kegelgetrieberadabschnitt (204), der auf dem dritten mit Zähnen versehenen Getrieberad (206) ausgebildet ist, und Kegelgetrieberäder umfaßt, die die ersten und zweiten mit Zähnen versehenen Getrieberäder (200, 202) bilden.

11. Magnetbandkassette (10) nach Anspruch 1, die einen ersten Abschnitt (14, 16) von im wesentlichen der gleichen Größe und Konfiguration wie eine entsprechend große Floppy Disk hat, bei der der Bandlaufweg (62) in der Magnetbandkassette (10) definiert ist und sich über eine Position (36, 38) hinweg erstreckt, in der Daten zwischen einem Magnetband (12) und einem Magnetplattenlaufwerkkopf übertragbar sind, bei der die Bandrollen (26, 28) um eine Achse angeordnet sind, die sich seitlich in bezug auf die Magnetbandkassette (10) in einem Raum (30) erstreckt, der in einem zweiten Abschnitt (11) der Magnetbandkassette (10) definiert ist, wobei das erste mit Zähnen versehene Getrieberad (76) mit der Zuführungs-Bandrolle (26) gekuppelt ist, das zweite mit Zähnen versehene Getrieberad (78) mit der Aufnahme-Bandrolle (28) gekuppelt ist, und das dritte mit Zähnen versehene Getrieberad mit einen Kraftübertragungsweg (48, 150, 158, 128) zum wahlweisen Übertragen einer Antriebskraft von einem Magnetplattenlaufwerk auf eines der ersten und zweiten mit Zähnen versehenen Getrieberäder (76, 78) zusammenwirkt, wobei das dritte mit Zähnen versehene Getrieberad (128) zwischen einer ersten Position, in der die Antriebskraft auf das erste mit Zähnen versehene Getrieberad (76) übertragen werden kann, und einer zweiten Position bewegbar ist, in der die Antriebskraft auf das zweite mit Zähnen versehene Getrieberad (78) übertragen werden kann, und wobei das dritte mit Zähnen versehene Getrieberad (128) auf eine Drehantriebskraft anspricht, um das dritte mit Zähnen versehene Getrieberad (128) in einer ersten Richtung drehend anzutreiben, um eine Verlagerung zu der ersten Position hin zu bewirken, und auf eine Drehantriebskraft anspricht, um das dritte mit Zähnen versehene Getrieberad (128) in einer zweiten Richtung drehend anzutreiben, um eine Verlagerung zu der zweiten Position hin zu bewirken.

12. Magnetbandkassette (10) nach Anspruch 11, bei der das dritte mit Zähnen versehene Getrieberad (128) des Kraftübertragungsweges (48, 150, 158, 128) auf einer als Drehpunkt dienenden Basis (130) montiert ist, die in der Lage ist, sich zwischen der ersten und der zweiten Position zu verlagern.

13. Magnetbandkassette (10) nach Anspruch 12, bei der das dritte mit Zähnen versehene Getrieberad (128) einem Mittel zum Einschränken der Drehung der Drehpunkt dienenden Basis (130) zuordenbar ist, um die Drehantriebskraft des Magnetplattenlaufwerks in eine Kraft umzusetzen, die eine Schwenkbewegung des dritten mit Zähnen versehenen Getrieberades (128) zwischen der ersten und der zweiten Position verursacht.

14. Magnetbandkassette (10) nach Anspruch 1, die hohl ist und einen ersten Abschnitt (14, 16), der in ein Magnetplattenlaufwerk einführbar ist, und einen zweiten Abschnitt (11) zum Aufnehmen des Magnetbandes (12) aufweist, wobei der Bandlaufweg (62) innerhalb des ersten Abschnitts (14, 16) der Magnetbandkassette (10) so definiert ist, daß er sich über einen Ort (36, 38) erstreckt, an dem ein Magnetplattenlaufwerkkopf des Magnetplattenlaufwerks Daten zwischen dem Magnetband (12) und dem Magnetplattenlaufwerkkopf übertragen kann, wobei die Magnetbandkassette (10) ferner ein Magnetband-Führungsmittel (64) zum Transportieren des Magnetbandes (12) längs des Bandlaufweges (62) in einander entgegengesetzten ersten und zweiten Richtungen enthält und wobei das dritte mit Zähnen versehene Getrieberad (128) bewegbar ist zwischen einer ersten Position zum Eingreifen in das erste mit Zähnen versehenen Getrieberad (76) und einer zweiten Position zum Eingreifen in das zweite mit Zähnen versehenen Getrieberad (78) entsprechend der Betätigung des Mittels (130, 138) zum Verlagern, das betätigbar ist, um das dritte mit Zähnen versehene Getrieberad (128) zwischen der ersten und der zweiten Position abhängig von der Antriebsrichtung des Mittels (76, 116, 120, 128, 132, 162) zum Antreiben zu verlagern.

15. Magnetbandkassette (10) nach Anspruch 14, bei der das Magnetband-Führungsmittel (64) zum Definieren des Bandlaufweges umfaßt: ein Mittel zum Ausrichten der Magnetbandkassette (10) mit dem Magnetplattenlaufwerk, wenn die Magnetbandkassette (10) in das Magnetplattenlaufwerk geladen wird, und das Mittel (64) zum Führen des Magnetbandes (12) innerhalb der Magnetbandkassette (10) derart, daß wenn die Magnetbandkassette (10) mit dem Magnetplattenlaufwerk ausgerichtet ist, das Magnetband (12) auf einen Ort (36, 38) eingestellt ist, an dem Daten zwischen dem Magnetband (12) und dem Magnetplattenlaufwerkkopf übertragen werden können.

16. Magnetbandkassette (10) nach Anspruch 14, bei der innerhalb des ersten Abschnitts (14, 16) der Magnetbandkassette (10) das Führungsmittel eine Vielzahl von Banddrehungsführungen (64) umfaßt, wobei sich das Magnetband (12) um jede der Banddrehungsführungen (64) im wesentlichen um 180° schlingt, um die Richtung des Transports des Magnetbandes (12) im wesentlichen um 180° zu ändern, so daß das Magnetband (12) durch den ersten Abschnitt (14, 16) transportiert wird, der eine plattenähnliche Form hat, die zum Einführen in das Magnetplattenlaufwerk geeignet ist.

17. Magnetbandkassette (10) nach Anspruch 14, die eine erste Bandrolle (26) und eine zweite Bandrolle (28) umfaßt, zwischen denen das Magnetband (12) ab- bzw. aufgewickelt wird, wobei die ersten und zweiten Bandspulen (26, 28) um eine Drehachse drehbar sind, die sich seitlich und horizontal in bezug auf die Magnetbandkassette (10) erstreckt.

18. Magnetbandkassette (10) nach Anspruch 17, bei der das Mittel (26, 28, 64) zum Transportieren einen Kraftübertragungsweg (48, 150, 152, 128) zum Übertragen einer Antriebskraft von einem Antriebsmotor, der in das Magnetplattenlaufwerk eingebaut ist, auf das dritte mit Zähnen versehene Getrieberad (128) umfaßt, wobei der Kraftübertragungsweg (48, 150, 152, 128) einen Kupplungsmechanismus (144, 150) zum lösbaren Eingreifenlassen des dritten mit Zähnen versehenen Getrieberades (128) in das Mittel (128, 130, 138) zum Verlagern des dritten mit Zähnen versehenen Getrieberades enthält.

19. Magnetbandkassette (10) nach Anspruch 17, bei der die ersten und zweiten Getrieberäder (104, 106) mit den ersten und zweiten Bandspulen (26, 28) zur Drehung mit diesen um die sich seitlich und horizontal erstreckende Drehachse in Eingriff stehen und daß das Mittel (26, 28, 64) zum Transportieren des Magnetbandes Elemente (130, 138) enthält zum Umsetzen der Drehung des dritten mit Zähnen versehenen Getrieberades (128) um eine Drehachse, die sich vertikal erstreckt, in eine Drehung eines damit zusammenwirkenden der ersten und zweiten mit Zähnen versehenen Getrieberäder (104, 106) um die sich seitlich und horizontal erstreckende Achse enthält.

20. Magnetbandkassette (10) nach Anspruch 19, bei der die Elemente zum Umsetzen der Drehung einen Kegelgetrieberadabschnitt, der auf dem dritten mit Zähnen versehenen Getrieberad (322) ausgebildet ist, und Kegelgetrieberäder (304, 306) umfassen, die auf den ersten und zweiten mit Zähnen versehenen Getrieberädern (300, 302) ausgebildet sind.

21. Magnetbandkassette (10) nach Anspruch 8, bei der an dem Ende der Verlagerungsbewegung des dritten mit Zähnen versehenen Getrierberades (322) das Ritzel (332) von dem dritten mit Zähnen versehenen Getrieberad (322) freigegeben wird, wenn das dritte mit Zähnen versehene Getrieberad (322) mit einem der ersten und zweiten mit Zähnen versehenen Zahnräder (300, 302) in Eingriff steht.

## FIG.1

## FIG.2

FIG.3

EP 0 214 820 B1

FIG.4

FIG.5

## FIG.6

## FIG.7

# FIG.8

# FIG.9